# EUROPÄISCHE PATENTSCHRIFT

(11) **EP 2 998 127 B1**
(45) Veröffentlichungstag und Bekanntmachung des Hinweises auf die Patenterteilung: **23.11.2016**
(21) Anmeldenummer: 14003259.0
(22) Anmeldetag: 19.09.2014
(51) Int. Cl.: B42D 25/455, B42D 25/46, B42D 25/465, B42D 25/23, B42D 25/24, C09D 11/322

(54) **Mehrlagiges Sicherheitsdokument und Verfahren zur Herstellung des mehrlagigen Sicherheitsdokuments**
Multilayer security document and method for producing the multilayer security document
Document de sécurité multicouches et procédé de fabrication du document de sécurité multicouches

(43) Veröffentlichungstag der Anmeldung: 23.03.2016
(73) Patentinhaber: Mühlbauer GmbH & Co. KG, 93426 Roding (DE)
(72) Erfinder: Späth, Anton, 93437 Furth im Wald (DE); Kopececk, Kurt, 93246 Roding (DE); Höcherl, Franz, 94344 Wiesenfelden (DE); Brunner, Anton, 93444 Bad Kötzting (DE); Borchard, Falc, 92442 Wackersdorf (DE)
(74) Vertreter: Schmidt, Steffen J.

(56) Entgegenhaltungen:
- EP-A1- 2 676 803
- DE-C2- 19 631 283
- US-A1- 2002 071 016
- US-A1- 2011 045 255
- US-A1- 2012 328 853
- US-B2- 7 201 953

## Beschreibung

### Hintergrund

Hier wird ein mehrlagiges Sicherheitsdokument und ein Verfahren zur Herstellung des mehrlagigen Sicherheitsdokuments vorgestellt. Ein Sicherheits- oder auch Identifikationsdokument kann insbesondere ein Personaldokument in der Form eines Buches, zum Beispiel ein Reisepass mit einer sog. Inhaberseite, ein Personalausweiskarte, eine Führerscheinkarte, eine Debit-, Kredit- oder Scheckkarte, eine Krankenkassen- oder Versicherungskarte sein. Unter einem hier beschriebenen Sicherheitsdokument sind auch, Visa, Geldkarten, Etiketten, Zutrittsausweise, oder dergleichen verstanden. Dieses Sicherheits- oder Identifikationsdokument kann ein mit einem Bild zu bedruckendes Bildträgerelement haben.

Sicherheits- oder Identifikationsdokumente dieser Art werden in der Regel bis auf Personalisierungsdaten zentral gefertigt und anschließend dezentral, zum Beispiel auf Meldestellen, bei Behörden oder in Unternehmen, die zur Ausstellung derartiger Dokumente berechtigt sind, mit einer Personalisierung versehen. Bei der Personalisierung werden den jeweiligen Inhaber des Sicherheits- oder Identifikationsdokuments individuell bezeichnende Text-, Zahlen- und/oder Bilddaten (zum Beispiel Name und Anschrift des Inhabers, Geburtsdatum, Geburtsort, Foto des Inhabers, biometrische Daten des Inhabers, etc.) in das Sicherheits- oder Identifikationsdokument eingebracht. Diese Text-, Zahlen- und/oder Bilddaten sind zumindest teilweise von einem Betrachter unmittelbar lesbar.

### Stand der Technik

Um Farbbild(abschnitte) in ein Sicherheits- oder Identifikationsdokument einzubringen wird im Stand der Technik ein Farb- oder Grautonbild mittels D2T2 (=Dye Diffusion Thermal Transfer)-Druck obenliegend auf das Dokument aufgebracht. Allerdings ist ein mit D2T2-Druck aufgebrachtes Bild nur wenige Jahre, oft kürzer als die Gültigkeit des Sicherheits- oder Identifikationsdokuments, beständig.

Dokument DE 196 31 283 C2 offenbart ein Verfahren zur Herstellung einer Datenträgerkarte mit einem bedruckten Kartenkern und einer transparenten Kartendeckschicht, zwischen denen eine Klebeschicht angeordnet ist. Die Klebeschicht wird dabei mittels einer wässrigen Dispersionsschicht ausgebildet.

Dokument US 7,201, 953 B2 beschreibt ein Verfahren zur Herstellung eines mehrlagigen Identifikationsdokuments, bei dem eine Klebeschicht zwischen einem bedruckten Kartenkern und einer Deckschicht vorgesehen ist. Die Klebeschicht ist derart zusammengesetzt, dass sie die Reibung zwischen dem Kartenkern und der Deckschicht erhöht.

Dokument US 2011/045255 A1 beschreibt eine Zusammensetzung zum Verbinden zweier Schichten eines Identifikationsdokuments, die ein Polymerharz mit niedriger Glasübergangstemperatur sowie ein kristallines Polymer umfasst.

Des Weiteren sind verschiedene Farbtinten zum Bedrucken von Oberflächen aus dem Dokument US 2012/328853 A1 bekannt.

### Zugrundeliegendes technisches Problem

Für derartige mehrlagige Sicherheits- oder Identifikationsdokumente besteht die Anforderung, ein oder mehrere Farbbilder oder Farbbildabschnitte mit guter Fälschungssicherheit bereitzustellen. Insbesondere soll eine Manipulation oder der Versuch einer Delamination zur zuverlässigen, zumindest teilweisen Zerstörung der Farbbild(er)abschnitte führen.

### Technische Lösung

Zur Lösung dieses Problems wird ein Verfahren zur Herstellung eines mehrlagigen Sicherheits- oder Identifikationsdokuments mit dem Merkmalen des Anspruchs 1 sowie ein Sicherheits- oder Identifikationsdokument mit den Merkmalen des Anspruchs 11 vorgeschlagen.

Bei dem Verfahren wird auf einer Lage ein Farbbild(abschnitt) und auf einer zweiten Lage ein Aktivator aufgebracht. Die beiden Lagen werden so aufeinander laminiert, dass das Farbbild und der Aktivator miteinander in Kontakt kommen, reagieren und so das Farbbild durch die Parameter der Lamination (Druck, Temperatur, Zeit) in einem sicheren Gesamtverbund (aus den beiden Lagen) manipulationssicher eingebettet ist.

Insbesondere wird ein Verfahren vorgeschlagen zur Herstellung eines mehrlagigen Sicherheits- oder Identifikationsdokuments mit den folgenden Schritten:
- Bereitstellen einer Inlaylage aus thermoplastischer und temperaturstabiler Folie;
- Bedrucken der Inlaylage mit wenigstens einem Farbbildabschnitt, vorzugsweise mittels Druckfarbe in Tintenstrahltechnik, Tonerdrucktechnik oder HP indigo;
- Bereitstellen einer Overlaylage aus thermoplastischer und temperaturstabiler Folie
- Bedrucken der Overlaylage mit einem Aktivator in einem Aktivatorbereich, so dass nach einem Zusammenführen der Overlaylage und der Inlaylage der Aktivatorbereich mit dem wenigstens einen Farbbildabschnitt zumindest teilweise zur Deckung kommt;
- Zusammenführen der Overlaylage und der Inlaylage, so dass der wenigstens eine Farbbildabschnitt der Inlaylage mit dem mit Aktivator bedruckten Bereich der Overlaylage zumindest teilweise zur Deckung kommt;
- Laminieren und Abkühlen der Overlaylage und der Inlaylage, wobei die beiden Lagen so aufeinander laminiert werden, dass das Farbbild und der Aktivator miteinander in Kontakt kommen und durch entsprechend gewählte Druck-, Temperaturund Zeit - Parameter der Lamination miteinander reagieren und die beiden Lagen zu einem Lagenverbund vereint werden; sowie
- Vereinzeln des einen oder mehrerer Sicherheits- oder Identifikationsdokumente aus dem Lagenverbund.

### Vorteile, Ausgestaltungen, Varianten

Diese Farbbildtechnologie ist unter verschiedenen Sicherheitsaspekten vorteilhaft. Die Lebensdauer wird durch das Einbetten auf bis zu 10 Jahre stark erhöht. Eine Lichtechtheit des Farbbilds wird nach der BWS Skala (ISO 12040) von 5 - 6 erreicht; außerdem ist das Farbbild auch vor mechanischen Einflüssen geschützt. Insbesondere im Verhältnis zu existierenden Vorschlägen, die zwar eingebettete Bilder, jedoch keinen Verbund zwischen den Folien bewerkstelligen können, ist die vorliegende Lösung vorteilhaft. Bei diesen bekannten Vorschlägen liegt das Farbbild über einem Offsetdruck und anderen Sicherheitsmerkmalen; Fälschungen des Bildes des Ausweisbesitzers oder Passbesitzers sind daher sehr einfach zu bewerkstelligen. Die hier vorliegende Lösung kann das Farbbild oder Laserbild durch Beimischen unterschiedlicher Sicherheitspigmente noch fälschungssicherer machen.

Als Aktivator wird ein Lösemittel-basierter Aktivator verwendet der synthetische Kunstharze mit organischen Lösemitteln enthält, und wobei die synthetischen Kunstharze mit den organischen Lösemitteln und der Druckfarbe thermisch bei einer Erwärmung auf über 100° Celsius thermisch reagieren. Der Aktivator kann in einer Variante folgende Betandteile enthalten:2-Methoxy-1-methylethylacetat 50 - 100 Gew. %, Dihydro-2(3 H)-furanon 12,5 - 20 Gew. % 2-Methoxypropylacetat 0,1-0,25 Gew. %. Als Overlaylage kann eine transparente Folie bereitgestellt werden, und der Aktivator kann durch Siebdruck aufgebracht werden, bevor die Overlaylage und die Inlaylage zusammengeführt werden.

Die Inhaltsstoffe des Aktivators werden so gewählt, dass sie vom für die Overlaylage und die Inlaylage verwendeten Folienmaterial unabhängig sind. Die Inhaltsstoffe des Aktivators sind thermoplastisch, lösemittelbasierend, und hitzebeständig bis 200 °Celsius. Der Aktivator geht eine Verbindung, einen Verbund oder eine Vermischung mit der Farbtinte ein, bei der zumindest der Aktivator und die Farbtinte an den Orten keine klare Grenzlinie bilden, an denen sie aneinander liegen. Der Aktivator wird vorzugsweise mit ungeradliniger Randkontur aufgebracht.

Als Farbtinte zum Bedrucken der Inlaylage kann eine Farbtinte mit einer oder mehrerer der folgenden Tintenanteile verwendet werden:
a. Schwarz enthaltend
   i. Gamma-butyrolacton mit einem Anteil von > 10 Gewichts-%,
   ii. Vinylchlorid-Vinylacetatecopolymer mit einem Anteil von > 5 Gewichts-%, und
   iii. Carbon SCHWARZ als Farbstoff mit einem Anteil von > 2,5 Gewichts-%;
b. Magenta enthaltend
   i. Gamma-butyrolacton mit einem Anteil von > 10 Gewichts-%,
   ii. 2-Methoxy-1-Methylethylacetat mit einem Anteil von > 10 Gewichts-%, und
   iii. Quinacridon - MAGENTA als Farbstoff mit einem Anteil von > 1 Gewichts-%;
c. Cyan enthaltend
   i. Gamma-butyrolacton mit einem Anteil von > 10 Gewichts-%,
   ii. Vinylchlorid-Vinylacetatecopolymer mit einem Anteil von > 5 Gewichts-%, und
   iii. Phthalocyanin - BLAU als Farbstoff mit einem Anteil von > 1 Gewichts-%; und
d. Gelb enthaltend
   i. Gamma-butyrolacton mit einem Anteil von > 10 Gewichts-%,
   ii. Vinylchlorid-Vinylacetatecopolymer mit einem Anteil von > 5 Gewichts-%, und
   iii. Azo Nickel Complex Pigment als Farbstoff mit einem Anteil von > 5 Gewichts-%.

Dem Aktivator und / oder der Druckfarbe können Sicherheitspigmente beigemischt werden. Dem Aktivator kann wenigstens ein in Bezug auf den Aktivator oder die Farbtinte chemisch inertes Pigment beigemischt werden, vorzugsweise in Form von Flocken, mit einer Partikelgröße von etwa 5 µm bis etwa 60 µm, bevorzugt etwa 15 µm bis etwa 40 µm, vorzugsweise mit einem Gewichtsanteil von nicht mehr als 1% bezogen auf das Gewicht des Aktivators, und enthaltend zum Beispiel Silizium, Siliziumdioxid, Glimmer, Titan- oder Zinnoxid. Diese Pigmente können so gewählt und ausgestaltet sein, dass sie einen optischen Effekt über dem Farbbild bewirken, der mit bloßem Auge sichtbar ist, und/oder einen schimmernden Glanzeffekt erzeugt; und / oder unter einem Mikroskop als Sicherheits-Pigmente oder als Farbpigmente, zum Beispiel aus Glimmer + SiO₂, TiO₂ und SnO₂, detektierbar sind; und/oder in spezifischen Mischverhältnissen als zwei, drei oder mehr unterschiedliche Pigmente vorgesehen, welche Mischverhältnisse mit bloßem Auge oder unter einem Mikroskop unterscheidbar sind.

Trotz der Pigmente kann unter das Farbbild weiterhin eine Lasergravur eingesetzt werden, da die Pigmente das Laserlicht nicht reflektieren. Unterschiedliche Pigmente können mit spezifischen Mischungsverhältnissen dem Aktivator manuell oder maschinell beigemischt werden. Die Aktivatorfläche kann mittels Siebdrucktechnik aufgebracht werden; beim Drucksieb, also der Schablone für die Aktivatorfläche werden vorzugsweise keine geradlinigen Konturen, sondern eine zackenförmig verlaufende Randkontur verwendet; somit wird der Übergang zwischen bedruckter Aktivatorfläche und im restlichen Kartendesign kaum visuell sichtbar. Unscharfe Randkonturen der Aktivatorflächen verursachen beim Delaminieren (Separieren der einzelnen Schichten) ein Einreißen der Overlaylage; dies kann somit als Sicherheitsmerkmal betrachtet werden.

Zu dem Bedrucken der Inlaylage kann ein Drucksystem mit einer Druckstation und mehreren unterschiedlich zu erwärmende Heizzonen verwendet werden, wobei die Heizzonen in dem Drucksystem auf der von einer Bedruckseite der Inlaylage abliegenden Seite, aufstromseitig und abstromseitig zur Druckstation sowie bei der Druckstation angeordnet sind, und wobei die Heizzonen mit einem in Durchlaufrichtung der Inlaylage durch das Drucksystem ansteigenden Temperaturprofil betrieben werden.

Das Bedrucken der Inlaylage in dem Drucksystem kann mit 600 DPI oder einer höheren Auflösung erfolgen.

Ein Farbprofil der Farbtinten kann auf das Material der Inlaylage abgestimmt werden, und die Tintenmenge kann an die Durchlaufgeschwindigkeit und das Temperaturprofil der Heizzonen des Drucksystems angepasst werden. Für die Abstimmung / Anpassung des Farbprofils kann ein mehrschrittiges Vorgehen verwendet werden:
Auswahl einer Formats für das Profil,
   Auswählen der Bedingungen zum Erzeugen des Profils (u.a. Druckertyp, Tintensortiment, Druckauflösung
   Drucken einer Farbkarte und anschließendes Festlegen der Obergrenze der Tintenmenge abhängig vom zu bedruckenden Medium
Justieren der Linearisierung
   Die Gradationscharakteristiken jeder CMYK-Tinte wird automatisch justiert durch Drucken der Farbkarte und Ausmessen der Farben
   Drucken der auf die Farbkarte angewendeten Linearisierung und Prüfen, ob die Gradationscharakteristiken jeder automatisch justierten CMYK-Tinte glatt sind.

Automatisches Justieren der Graubalance
Die Grauskalencharakteristika der CMY-gemischten Farbtinten sind automatisch justiert durch Drucken der Farbkarte und Ausmessen der Farben
Drucken der auf die Farbkarte angewendeten Graubalance und Prüfen, ob die Die Gradationscharakteristiken der Graubalance glatt sind.

Das ICC - Profil (bewährtes Farb -Management Konzept des International Color Consortium) wird erzeugt durch Drucken der Farbkarte und Ausmessen der Farben. Grundeinstellung der Kalibrierung durch Drucken der Farbkarte und Messen der Farben Aufzeichnen der Grundfarben als korrigierte Farben
Speichern des erzeugten Geräteprofils

Als für das mehrlagige Sicherheits- oder Identifikationsdokument einzusetzende Lagen wird ein Folienmaterial, bevorzugt als Bogenmaterial oder endloses Bahnmaterial, aus Glykolmodifiziertem Polyethylenterephthalat (PETG) oder Polycarbonat (PC) bevorzugt mit einer Dicke von mind. 75µm oder mehr, verwendet, wobei auf einer Seite Sicherheitsmerkmale in Form von Offsetdruck, Guillochen, Mikrotext, Sicherheitsfarben aufgebracht sind, und auf der gegenüberliegenden Seite der Aktivator aufgebracht ist.

Wenn die Overlaylage und die Inlaylage als Material Polyethylen (PE), Polyethylenterephthalat (PET) oder Glykol-modifiziertem Polyethylenterephthalat (PETG) enthalten, kann zum Beispiel bei Temperaturen im Bereich von etwa 70 °C bis etwa 160 °C, insbesondere von etwa 100 °C bis etwa 130 °C, vorzugsweise bei etwa 120 °C, laminiert werden. Bei Polycarbonat (PC) können die Temperaturen zum Beispiel im Bereich von etwa 140 °C bis etwa 260 °C, oder von etwa 180 °C bis etwa 220 °C, vorzugsweise bei etwa 200 °C liegen.

Unter der das Farbbild tragenden Inlaylage kann mindestens eine laserfähige Folienlage eingefügt werden, in welchen ein Laserbild eingebracht wird, wobei vorzugsweise das Laserbild nachträglich durch das Farbbild hindurch erzeugt wird. Eine Folienlage wird dadurch "laserfähig", dass Zuschlagstoffe (auch Additive genannt) bei der Folienherstellung in die Kunststoffschmelze eingebracht werden und darin verrührt werden, bevor die Folien je nach gewünschter Foliendicke und Kunststoff kalandriert oder extrudiert wird. Ein Beispiel eine Additivs ist Kohlenstoff. Es sind aber auch andere Stoffe verwendbar, welche die Laserenergie absorbieren und dunkel werden bzw. dabei selbst "verbrennen", indem die Laserenergie über die Wellenlänge des Laserstrahls in den Zuschlagsstoff einkoppeln kann. Die Wellenlänge hängt vom Zuschlagstoff ab; sein kann z.B. 1064nm betragen.

Eine mittels Laserstrahl ausgeführte Personalisierung kann in den laserfähigen Schichten außerhalb der Inlaylage(n) verteilt erfolgen. In einer Variante wird die bedruckte Overlaylage als laserfähig eingesetzt. Hieraus kann eine Überlappung der Sicherheitsmerkmale entstehen. Dabei kann der Laserlichtstrahl durch alle Overlaylagen bis zu der / den Inlayfolie(n) (auf der Vorderseite Träger des Farbbilds) dringen. Durch die Wellenlänge des Lasers färben sich entsprechend gewählte Additive. zur Druckfarbe schwarz ein. Dabei koppelt die Energie des Lasers in die Additive ein. Dadurch erwärmt sich das Additiv-Teilchen soweit, dass es umliegendes Material verbrennt. Daher wird das Laserbild schwarz. Jeder Partikel entnimmt dem Laserstrahl Energie. Wenn die Energie am Laser geringer gestellt wird, kann eine Graustufe im Laserbild erzeugt werden. Wenn die Energie höher ist, entsteht beim Verbrennen des umliegenden Folienmaterials mehr Gas. Die Gasblasen verbinden sich und heben an diesen Stellen die Folie an. So können taktile Beschriftungen gebildet werden.

Zum Laminieren der Inlaylage und der Overlaylage kann eine Laminierstation verwendet werden, in der ein Temperatur-, Druck-, und Zeitprofil auf die verwendete Farbtinte und den verwendeten Aktivator eingestellt werden.

Das Temperatur-, Druck-, und Zeitprofil kann so auf die verwendete Farbtinte und den verwendeten Aktivator eingestellt werden, dass sich zuerst der Aktivator mit der Farbtinte im Laminierprozess durch Erhitzung verbindet und sich dann die Overlaylage und die Inlaylage sich mit einander verbinden. Gleichwertige Materialien können z.B. alle Lagen aus demselben Kunststoff sein. Z.B. können alle Folien aus Polycarbonat oder PET-G oder PVC sein. Auch die Kombination von PVC mit PET-G, PET-G mit Polycarbonat ist gleichwertig, da diese Kunststoffe im chemischen Sinn miteinander verwandt sind. Hierbei können Folien mit Lagendicken von 100µm oder mehr verwendet werden. Bei zu hohem Druck und / oder Temperatur zerreißt das Farbbild oder wird fleckig. Bei zu geringer Temperatur separiert sich das Folienpaket leicht.

Das Aufbringen des Aktivators wird im Siebdruckprozess aufgebracht, es sind aber auch ähnliche Druckverfahren, z.B. Flexodruck, Sprühlackieren, einsetzbar.
Siebgewebe: Polyester PET mit Maschenweite 100 oder 77 PW
Druckrakel: mehrschichtige Gummirakel
Druckparameter: Prozess-spezifischer Siebdruck mit Heißlufttrocknung, z.B. einem Durchlauftrockner oder Kombitrockner bis 100 °Celsius

Unterhalb der das Farbbild tragenden Schicht kann mindestens eine laserfähige Schicht liegen, in welche ein Laserbild eingebracht wird. Das Laserbild wird nachträglich durch das Farbbild hindurch erzeugt.

Zum Laminieren sind die folgenden Parameter für die Anwendung in Polycarbonat verwendbar. Jedoch sind diese Parameter nur Beispiele da es immer auf die richtige Kombination von Pressdruck und Temperatur sowie dem Material abhängt.
- Heizen: 175°C - 185 °C für 10 - 20 Sec. und 130 Bar.
- Kühlen: 25°C - 40 °C für 10 - 20 Sec. und 130 Bar.

Als erstes verbindet sich der Aktivator mit der Farbe im Laminierprozess durch Erhitzung.
Danach erweichen erst die Kunststoffschichten und verbinden sich mit einander. Generell sind alle Schichten aus gleichwertigem Material, optimal sind Materialienstärken von 100 µm oder mehr. Beim Offset-Sicherheitsdruck wird das Design seitenrichtig am Druckbogen appliziert. Die Aktivatorbereich sind auf der gegenüberliegenden Seite vom Offsetdruckbogen und mindestens gleich groß der Bildgröße des Farbbildes. Die Größe der Aktivatorfläche überlappt an allen Seiten die Bildfläche des Farbbildes um mindestens 2 mm.

Ein mehrlagiges Sicherheits- oder Identifikationsdokument kann herzustellen sein nach einem Verfahren mit einem oder mehreren der obenstehenden Schritte und kann folgenden Aufbau aufweisen: wenigstens eine eine Frontseite bildende erste Overlaylage, und wenigstens eine eine Kernlage bildende erste Inlaylage, die an der ersten Overlaylage anliegt, wobei die Overlaylage auf einer zu der ersten Inlaylage hin orientierten Seite in einem Aktivatorbereich mit einem Aktivator versehen ist, und die Inlaylage auf einer zu der ersten Overlaylage hingewandten Seite mit wenigstens einem Farbbildabschnitt versehen ist, wobei der Aktivatorbereich und der Farbbildabschnitt jeweils so an der Overlaylage bzw. der Inlaylage angeordnet, gestaltet und bemessen sind, dass der Aktivatorbereich und der wenigstens eine Farbbildabschnitt einander zumindest teilweise überdecken; und wobei die erste Overlaylage und die erste Inlaylage so aufeinander laminiert sind, dass das Farbbild und der Aktivator miteinander in Kontakt stehen und die beiden Lagen zu einem Lagenverbund vereint zusammenlaminiert sind.

Bei dem mehrlagigen Sicherheits- oder Identifikationsdokument kann auf einer von der ersten Overlaylage abgewandten Seite der ersten Inlaylage eine zweite, dritte, ... n-te Inlaylage angeordnet sein, und / oder auf einer von der ersten Inlaylage abgewandten Seite der ersten Overlaylage wenigstens eine zweite Overlaylage angeordnet sein, und / oder auf einer von der ersten Overlaylage abgewandten Seite der ersten, zweiten, dritten, ... n-ten Inlaylage wenigstens eine erste Underlaylage angeordnet sein, und/oder auf einer von der ersten, zweiten, dritten, ... n-ten Inlaylage abgewandten Seite der ersten Underlaylage wenigstens eine zweite Underlaylage angeordnet sein.

Bei dem mehrlagigen Sicherheits- oder Identifikationsdokument kann in laserfähigen Lagen außerhalb der oder den Inlaylagen wenigstens eine Laserpersonalisierung verteilt angeordnet sein, wobei vorzugsweise die bedruckte erste Overlaylage laserfähig sein kann. Beim Lasern der Folie soll das Material/die Additive nicht ausgasen. Es erfolgt keine Schwächung oder Beeinträchtigung der Laminatqualität oder gar der eingebettet Sicherheitsmerkmale beim Lasern, es sein denn, die Wellenlänge, Folie und Offsetfarben und Sicherheitsmerkmale sind nicht aufeinander abgestimmt.

In dem mehrlagigen Sicherheits- oder Identifikationsdokument kann der Aktivator wenigstens ein in Bezug auf den Aktivator oder die Farbtinte chemisch inertes Pigment aufweisen, vorzugsweise in Form von Flocken, mit einer Partikelgröße von etwa 5 µm bis etwa 60 µm, bevorzugt etwa 15 µm bis etwa 40 µm, vorzugsweise mit einem Gewichtsanteil von nicht mehr als 1% bezogen auf das Gewicht des Aktivators, und enthaltend zum Beispiel Silizium, Siliziumdioxid, Glimmer, Titan- oder Zinnoxid.

In dem mehrlagigen Sicherheits- oder Identifikationsdokument können die Pigmente so gewählt und ausgestaltet sein, dass sie einen optischen Effekt über dem Farbbild bewirken, der mit bloßem Auge sichtbar ist, und/oder einen schimmernden Glanzeffekt erzeugt; und / oder unter einem Mikroskop als Sicherheits-Pigmente oder als Farbpigmente, zum Beispiel aus Glimmer + SiO₂, TiO₂ und SnO₂, detektierbar sind; und/oder in spezifischen Mischverhältnissen als zwei, drei oder mehr unterschiedliche Pigmente vorgesehen, welche Mischverhältnisse mit bloßem Auge oder unter einem Mikroskop unterscheidbar sind.

In dem mehrlagigen Sicherheits- oder Identifikationsdokument ist der Aktivator ein Lösemittel-basierter Aktivator, der synthetische Kunstharze mit organischen Lösemitteln enthält, und wobei die synthetischen Kunstharze mit der Druckfarbe und mit den organischen Lösemitteln thermisch verbunden sind, und wobei die Inhaltsstoffe des Aktivators so gewählt werden, dass sie vom für die Overlaylage und die Inlaylage verwendeten Folienmaterial unabhängig sind; und wobei der Aktivator thermoplastisch ist; und wobei eine Verbindung, ein Verbund oder eine Vermischung aus dem Aktivator und der Farbtinte gebildet ist, bei der zumindest der Aktivator und die Farbtinte an den Orten keine klare Grenzlinie bilden, an denen sie aneinander liegen; und/oder wobei der Aktivator mit ungeradliniger Randkontur aufgebracht ist.

### Kurzbeschreibung der Zeichnung

Weitere Ziele, Merkmale, Vorteile und Anwendungsmöglichkeiten ergeben sich aus der nachfolgenden Beschreibung einiger Ausführungsbeispiele und zugehöriger Zeichnungen.
Fig. 1 zeigt eine schematische seitliche Querschnittsdarstellung eines mehrlagigen Sicherheits- oder Identifikationsdokuments, das durch das hier vorgestellte Verfahren herstellbar ist.
Fig. 2 zeigt einen zu überprüfender Ausschnitt mit zwei unterschiedlichen Pigmenten.
Fig. 3 zeigt einen zu überprüfender Ausschnitt mit drei unterschiedlichen Pigmenten.

### Detaillierte Beschreibung

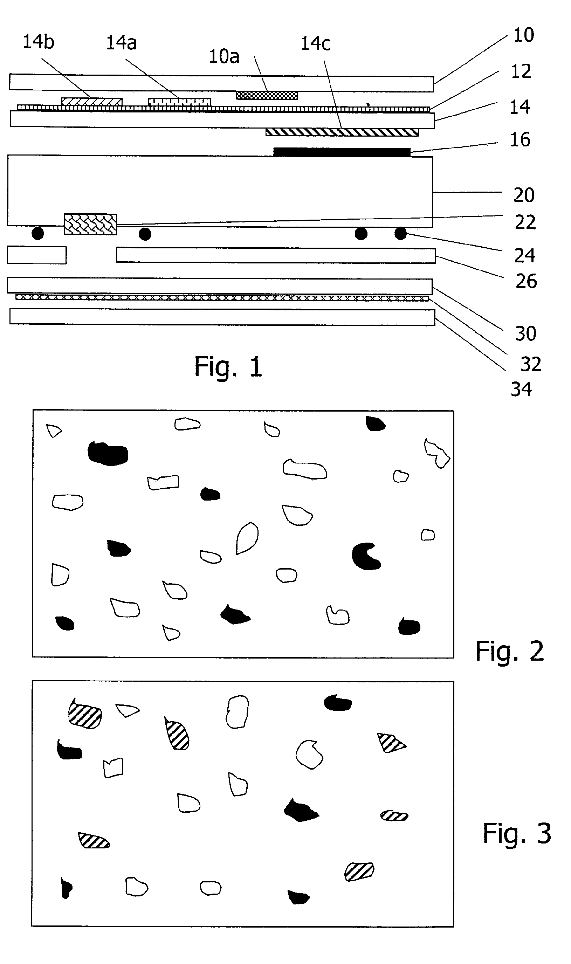

Wie in Fig. 1 gezeigt, hat ein mehrlagiges Sicherheits- oder Identifikationsdokument in der hier veranschaulichten Variante einer erste und eine zweite Overlaylage 14, 10 und einer ersten, zweiten Inlaylage 20, 18, aus thermoplastischer und temperaturstabiler Folie. Als Folie ist hier sowohl für die Overlaylagen 10, 14 als auch für die ersten, zweiten, dritten und vierten Inlaylagen 20, 18, 26, 28 Polycarbonat (PC) verwendet. Als erste und zweite Overlaylage 14, 10 ist in der vorliegenden Variante eine transparente Folie verwendet.

Das hier veranschaulichte mehrlagige Sicherheits- oder Identifikationsdokument hat insgesamt folgenden Aufbau: Eine eine Frontseite bildende zweite Overlaylage 10 und eine eine Kernlage bildende erste Inlaylage 20 liegen an beiden Seiten (Oberseite und Unterseite) der ersten Overlaylage 14 an. Die erste Overlaylage 14 ist auf einer zu der ersten Inlaylage 20 hin orientierten Seite in einem Aktivatorbereich mit einem Aktivator 14c versehen ist. Die erste Inlaylage 20 ist auf einer zu der ersten Overlaylage 14 hingewandten Seite mit einem Farbbildabschnitt 16 versehen ist, wobei der Aktivatorbereich und der Farbbildabschnitt jeweils so an der Overlaylage bzw. der Inlaylage angeordnet, gestaltet und bemessen sind, dass der Aktivatorbereich und der wenigstens eine Farbbildabschnitt einander zumindest teilweise überdecken. Die erste Overlaylage 14 und die erste Inlaylage 20 sind so aufeinander laminiert, dass das Farbbild und der Aktivator miteinander in Kontakt stehen und die beiden Lagen zu einem Lagenverbund vereint zusammenlaminiert sind.

Bei Varianten des mehrlagigen Sicherheits- oder Identifikationsdokuments ist zwischen der ersten Overlaylage 14 und der ersten Inlaylage 20 eine zweite, dritte, ... n-te Inlaylage 18 (Siehe Fig. 4). Diese zweite Inlaylage 18 - oder die dritte, ... n-te Inlaylage - trägt dann den Farbbildabschnitt 16. Auf der von der ersten Inlaylage 20 abgewandten Seite der ersten Overlaylage 14 ist die zweite Overlaylage 10 - oder eine dritte, ... n-te Overlaylage - angeordnet. An der zweiten Overlaylage 10 ist auf der der ersten Overlaylage zugewandten Seite ein Hologramm 10 angebracht. Alternativ oder zusätzlich können zweite, dritte, vierte, ... n-te Inlaylagen 26, 28 ... auch auf der von der ersten Overlaylage 14 abgewandten Seite der ersten Inlaylage 20 angeordnet sein. Eine erste, zweite, ... n-te Underlaylage 30, 34 kann an der äußersten der Inlaylagen, auf der von der / den Overlaylagen abgewandten Seite angeordnet sein. Die erste Overlaylage 14 kann mit einem ersten Druckbild 12, aufgebracht zum Beispiel in Form von Offsetdruck Guillochen, Mikrotext, Sicherheitsfarben oder dergleichen, versehen sein. Die erste Underlaylage 30 kann ebenfalls mit einem zweiten Druckbild 32, aufgebracht zum Beispiel in Form von Offsetdruck Guillochen, Mikrotext, Sicherheitsfarben oder dergleichen, versehen sein. In der ersten Inlaylage 20 kann ein Transponder-Microchip 22 eingebettet sein, der mit einer Antenne 24 verbunden ist und in eine Ausnehmung in der zweiten Inlaylage 26 reicht.

Für das mehrlagige Sicherheits- oder Identifikationsdokument kann in unterschiedlichen Varianten ein Folienmaterial als Bogenmaterial oder endloses Bahnmaterial aus holzfreiem Papier, Beschichtungspapier oder mit Harz imprägniertem Papier, Kunststoff- bzw. Plastikfolie aus Harz verwendet werden. Beispielsweise können eines oder mehrere der folgenden Materialien wie etwa Polyethylen (PE), Polyvinylchlorid (PVC), Polyvinylchlorid-Acetat-Copolymer, Polyethylenterephthalat (PET) oder Glykol-modifiziertes Polyethylenterephthalat (PETG), Polyethylennaphthalat (PEN), Acrylnitril-Butadien-Styrol-Copolymerisat (ABS), Polyvinylbutyral (PVB), Polymethylmethacrylat (PMMA), Polyimid (PI), Polyvinylalkohol (PVA), Polystyrol (PS), Polyvinylphenol (PVP), Polyethylen (PE), Polypropylen (PP), Polycarbonat (PC) oder deren Derivate, oder Metalle (Alu, Stahl, Edelmetalle) enthaltende Folien mit einer Dicke von mind. 75µm oder mehr verwendet werden. Das Folienmaterial der einzelnen Lagen kann an seinen beiden (Ober- und Unter-)Seiten jeweils eine unterschiedliche Rauhigkeit haben, z.B. FM = Fine Matte (R3z = 5.5 µm) und FV = Fine Velvet (R3z = 16 µm)

In der hier veranschaulichten Variante ist die erste Inlaylage 20 mit einem Farbbildabschnitt 16 mittels Druckfarbe in Tintenstrahltechnik bedruckt.

Das Farbbild kann ein Gesichtsbild einer Person sein. Die Personalisierung mittels Laser kann ein Graustufengesichtsbild sein oder eine vom Gesichtsbild verschiedene Information.

Passend dazu ist die zweite Overlaylage 14 mit einem Aktivator 14c in einem Aktivatorbereich bedruckt, wobei der Aktivatorbereich mit dem wenigstens einen Farbbildabschnitt zumindest teilweise zur Deckung kommt. In der hier veranschaulichten Variante überragt der Aktivatorbereich den Farbbildabschnitt an allen Seiten.

Als Aktivator 14c ist in der vorliegenden Variante ein Lösemittel-basierter Aktivator verwendet, der synthetische Kunstharze mit organischen Lösemitteln enthält, und wobei die synthetischen Kunstharze mit (den organischen Lösemitteln und) der Druckfarbe des Farbbildabschnitts 16 bei einer Erwärmung auf über 100° Celsius thermisch reagieren.

Dieser Aktivator dient dazu, die Druckfarbe haltbarer zu machen, ihre Farbpartikel abzukapseln und an den Lagen fest zu verankern. Die Inhaltsstoffe des Aktivators werden so gewählt, dass sie vom für die Overlaylage und die Inlaylage verwendeten Folienmaterial unabhängig sind. Die Größe der Aktivatorfläche überlappt an allen Seiten die Bildfläche des Farbbildes um mindestens 2 mm. Der Aktivator interagiert mit der Farbe/Pigmenten des Tintenstrahldruckes. Wegen Folienschrumpf und Aufsummierung von Toleranzen wird der Aktivator größer als das Farbbild gedruckt, damit in jedem Fall eine saubere Verbindung zwischen dem Aktivator und der Farbe/ den Pigmenten zustande kommt. In dem Bereich, in dem der Aktivator nicht mit dem Farbbild Kontakt hat, ist er transparent und für den Betrachter praktisch unsichtbar. Jedoch sind in der Tinte/Farbe ausreichend interagierende Stoffe enthalten, so dass die Tinte/Farbe auch über die Grenzen des eigentlichen Farbbildes hinweg mit dem Aktivator reagiert, wodurch auch in dem transparenten Bereich ein Verbund zwischen den Folien entsteht. Der Aktivator ist ein thermoplastischer Aktivator und reagiert thermisch mit der Farbtinte. Wegen prozesstechnischer Toleranzen wird der Aktivator überlappend über dem Farbbild gedruckt. Es entsteht ein Verbund aus Tinte und Aktivator. Thermoplastisch heißt, der Aktivator erstarrt nach dem Aufbringen/Trocknen und wird beim Laminieren wieder weich. Dem Aktivator kann auch ein Härtemittel zugesetzt sein, welches ein Lösen der Verbindung bei der fertigen Karte nicht mehr zulässt. Der farblose Aktivatorbereich wird mit modifizierter Randschärfe, d.h. keine glatte Randkontur appliziert und ist für den Betrachter transparent und kaum sichtbar. Der Aktivator ist hier durch Siebdruck aufgebracht, bevor die Overlaylage und die Inlaylage zusammengeführt und laminiert werden. Als erstes verbindet sich der Aktivator mit der Farbe im Laminierprozess durch Erhitzung. Danach erweichen erst die Lagen aus Folienmaterial von 100 µm oder mehr und verbinden sich mit einander.

Als Druckfarbe zum Bedrucken der Inlaylage wird in dieser Variante eine Farbtinte mit einer oder mehrerer der folgenden Tintenanteile verwendet werden:
a. Schwarz enthaltend
   - Gamma-butyrolacton mit einem Anteil von > 10 Gewichts-%,
   - Vinylchlorid-Vinylacetatecopolymer mit einem Anteil von > 5 Gewichts-%, und
   - Carbon SCHWARZ als Farbstoff mit einem Anteil von > 2,5 Gewichts-%;
b. Magenta enthaltend
   - Gamma-butyrolacton mit einem Anteil von > 10 Gewichts-%,
   - 2-Methoxy-1-Methylethylacetat mit einem Anteil von > 10 Gewichts-%, und
   - Quinacridon - MAGENTA als Farbstoff mit einem Anteil von > 1 Gewichts-%;
c. Cyan enthaltend
   - Gamma-butyrolacton mit einem Anteil von > 10 Gewichts-%,
   - Vinylchlorid-Vinylacetatecopolymer mit einem Anteil von > 5 Gewichts-%, und
   - Phthalocyanin - BLAU als Farbstoff mit einem Anteil von > 1 Gewichts-%; und
d. Gelb enthaltend
   - Gamma-butyrolacton mit einem Anteil von > 10 Gewichts-%,
   - Vinylchlorid-Vinylacetatecopolymer mit einem Anteil von > 5 Gewichts-%, und
   - Azo Nickel Complex Pigment als Farbstoff mit einem Anteil von > 5 Gewichts-%.

Auf einer Seite der zweiten Overlaylage 14 sind in der hier gezeigten Variante Sicherheitsmerkmale 14a, 14b als ultraviolettaktive Bilder, oder Bilder aus "Optical Variable Ink" (OVI). Dies dient als Sicherheitsmerkmal. Bei OVI handelt es sich zum Bespiel um Kipp-Effekt-Farbe, welche je nach Betrachtungswinkel unterschiedliche Farben zeigt (z.B. Magenta im Winkel 0°-30° und Gold von 30°-150° und wieder Magenta von 150°-180°. Die hier genannten Farben und Winkel sind nur zur Veranschaulichung). Die Sicherheitsmerkmale können auch als farblos fluoreszierende Designelemente aufgebracht sein. Auf der gegenüberliegenden Seite der zweiten Overlaylage 14 ist der Aktivator 14c aufgebracht.

Dem Aktivator und / oder der Druckfarbe sind in der vorliegenden Variante Sicherheitspigmente beigemischt. Dem Aktivator ist ein in Bezug auf den Aktivator oder die Farbtinte chemisch inertes Pigment beigemischt, in Form von Flocken mit einer Partikelgröße von etwa 15 µm bis etwa 40 µm, mit einem Gewichtsanteil von geringfügig weniger als 1% bezogen auf das Gewicht des Aktivators. Der Aktivator enthält in der vorliegenden Variante Siliziumdioxid. Es aber auch möglich, zum Beispiel Silizium, Glimmer, Titan- oder Zinnoxid zu verwenden. Diese Pigmente sind in der vorliegenden Variante so gewählt und ausgestaltet, dass sie einen optischen Effekt über dem Farbbild bewirken, der mit bloßem Auge sichtbar ist, und einen schimmernden Glanzeffekt erzeugt. Es sind auch Varianten möglich, bei denen unter einem Mikroskop als Sicherheits-Pigmente oder als Farbpigmente, zum Beispiel aus Glimmer + SiO₂, TiO₂ und SnO₂, detektierbar sind. In der vorliegenden Variante sind die Flocken in spezifischen Mischverhältnissen als zwei unterschiedliche Pigmente vorgesehen. Es sind auch Varianten möglich, bei denen drei oder mehr unterschiedliche Pigmente vorgesehen sind, deren Mischverhältnisse mit bloßem Auge oder unter einem Mikroskop unterscheidbar sind. In Fig. 2 ist ein zu überprüfender Ausschnitt mit zwei unterschiedlichen Pigmenten (blau / orange) gezeigt, die jeweils in bestimmter Häufigkeit vorhanden sind. In Fig. 3 ist ein zu überprüfender Ausschnitt mit drei Pigmenten (blau / orange / grün) gezeigt, die jeweils in bestimmter Häufigkeit vorhanden sind. Die Häufigkeiten der einzelnen Pigmentanteile können gleich (50:50) oder unterschiedlich (z.B. 20:80) sein.

Durch Hinzufügen der Pigmente wird die Karte quasi kodiert. Das Mischverhältnis und die Anzahl verschiedener Pigmente sind Dritten nicht bekannt. Bei einer Delamination würde das Mischverhältnis zerstört werden; es kann durch den Dritten nicht wieder hergestellt werden. Somit ist auch dies ein Sicherheitsmerkmal, denn einige Pigmente bleiben an der abgezogenen Folie haften. Es ist auch möglich, dass die Pigmente beim Laminieren infolge des Erweichens der Folie in die Oberfläche teils eingebettet werden.

Zur Überprüfung der Echtheit des Dokuments werden in unterschiedlichen Regionen mehrere, z.B. 8 bis 10 Bilder der unterschiedlichen Pigmente aufgenommen und aus deren Häufigkeit ein Mittelwert gebildet. Eine Abweichung der Häufigkeit von einem vorher festgelegten Wert, z.B. 10% wäre tolerierbar. Fig.2 und 3 zeigen einen Ausschnitt einer Aufnahme in einer Größenordnung von etwa 700 x 500 µm.

Das Hologramm auf der Overlayfolie kann mit dem Bildbereich und dem Aktivatorbereich teilweise überlappen und /oder folglich auch teilweise mit den Pigmenten überlappen.

Trotz der Pigmente kann unter das Farbbild weiterhin eine Lasergravur eingesetzt werden, da die Pigmente das Laserlicht nicht reflektieren. Unterschiedliche Pigmente können mit spezifischen Mischungsverhältnissen dem Aktivator manuell oder maschinell beigemischt werden. Die Aktivatorfläche kann mittels Siebdrucktechnik aufgebracht werden; beim Drucksieb, also der Schablone für die Aktivatorfläche werden vorzugsweise keine geradlinigen Konturen, sondern eine Zackenförmig verlaufende Randkontur verwendet; somit wird der Übergang zwischen bedruckter Aktivatorfläche und im restlichen Kartendesign kaum visuell sichtbar. Unscharfe Randkonturen der Aktivatorflächen verursachen beim Delaminieren (Separieren der einzelnen Schichten) ein Einreißen der Overlaylage; dies kann somit als Sicherheitsmerkmal betrachtet werden.

Zu dem Bedrucken der Inlaylage kann ein Drucksystem mit einer Druckstation und mehreren unterschiedlich zu erwärmende Heizzonen verwendet werden, wobei die Heizzonen in dem Drucksystem auf der von einer Bedruckseite der Inlaylage abliegenden Seite, aufstromseitig und abstromseitig zur Druckstation sowie bei der Druckstation angeordnet sind, und wobei die Heizzonen mit einem in Durchlaufrichtung der Inlaylage durch das Drucksystem ansteigenden Temperaturprofil betrieben werden.

Das Bedrucken der Inlaylage in dem Drucksystem erfolgt mit 600 DPI Auflösung.

Ein Farbprofil der Farbtinten kann auf das Material der Inlaylage abgestimmt werden. Auch die Tintenmenge ist an die Durchlaufgeschwindigkeit und das Temperaturprofil der Heizzonen des Drucksystems angepasst.

In drei Varianten enthalten die Overlaylage und die Inlaylage als Material Polyethylen (PE), Polyethylenterephthalat (PET) oder Glykol-modifiziertes Polyethylenterephthalat (PETG). In diesen drei Fällen wird bei Temperaturen im Bereich von etwa 70 °C bis etwa 160 °C, insbesondere von etwa 100 °C bis etwa 130 °C, vorzugsweise bei etwa 120 °C, laminiert.

Bei einer Variante, in der die Overlaylage und die Inlaylage als Material Polycarbonat (PC) enthalten, sind die folgenden Parameter zu verwenden:
- Heizen: 175 °C - 185 °C für 10 - 20 Sec. und 130 Bar.
- Kühlen: 25 °C - 40 °C für 10 - 20 Sec. und 130 Bar.

Unter der das Farbbild 16 tragenden ersten Inlaylage 20 sind in einer Variante eine oder mehrere laserfähige Folienlagen eingefügt. In diese Folienlagen, in welche ein Laserbild eingebracht wird, wobei das Laserbild nachträglich durch das Farbbild hindurch erzeugt wird.

Eine mittels Laserstrahl ausgeführte Personalisierung erfolgt in den laserfähigen Schichten außerhalb der Inlaylage(n) verteilt. In einer Variante wird die bedruckte Overlaylage als laserfähig eingesetzt. Hieraus kann eine Überlappung der Sicherheitsmerkmale entstehen. Dabei kann der Laserlichtstrahl durch alle Overlaylagen bis zu der / den Inlayfolie(n) (auf der Vorderseite Träger des Farbbilds) dringen. Durch die Wellenlänge des Lasers färben sich entsprechend gewählte Additive zur Druckfarbe schwarz ein. Durch die Energie des Lasers erwärmen sich die Additiv-Teilchen, so dass umliegendes Folien/Farbtinten-Material verbrennt. Damit kann das Laserbild als Schwarz/Weiss- oder Graustufenbild erzeugt werden. Wenn die Energie höher ist, entsteht beim Verbrennen des umliegenden Folienmaterials mehr Gas. Die Gasblasen verbinden sich und heben an diesen Stellen die Folie an. So können taktile Beschriftungen gebildet werden.

Zum Laminieren der Inlaylage(n) und der Overlaylage(n) wird eine Laminierstation verwendet, in der ein Temperatur-, Druck-, und Zeitprofil auf die verwendete Farbtinte und den verwendeten Aktivator eingestellt werden. Das Temperatur-, Druck-, und Zeitprofil ist so auf die verwendete Farbtinte und den verwendeten Aktivator eingestellt werden, dass sich zuerst der Aktivator mit der Farbtinte im Laminierprozess durch Erhitzung verbindet und sich dann die Overlaylage und die Inlaylage sich mit einander verbinden.

Das Aufbringen des Aktivators wird hier im Siebdruckprozess aufgebracht:
Siebgewebe: Polyester PET mit Maschenweite 100 oder 77 PW
Druckrakel: mehrschichtige Gummirakel
Druckparameter: Prozess-spezifischer Siebdruck mit Heißlufttrocknung,
mit Flachbett- oder Rund-Siebdrucktechnik mit Heißlufttrocknung.

Bei dem mehrlagigen Sicherheits- oder Identifikationsdokument kann in laserfähigen Lagen außerhalb der oder den Inlaylagen wenigstens eine Laserpersonalisierung verteilt angeordnet sein, wobei vorzugsweise die bedruckte erste Overlaylage laserfähig sein kann.

In einigen Varianten des mehrlagigen Sicherheits- oder Identifikationsdokuments hat der Aktivator ein oder mehrere in Bezug auf den Aktivator oder die Farbtinte chemisch inertes Pigment, in Form von Flocken, mit einer Partikelgröße von etwa 5 µm bis etwa 60 µm, bevorzugt etwa 15 µm bis etwa 40 µm, vorzugsweise mit einem Gewichtsanteil von nicht mehr als 1% bezogen auf das Gewicht des Aktivators. Das Pigment enthält zum Beispiel Silizium, Siliziumdioxid, Glimmer, Titan- oder Zinnoxid.

## Patentansprüche

1. Ein Verfahren zur Herstellung eines mehrlagigen Sicherheits- oder Identifikationsdokuments mit den folgenden Schritten:
a. Bereitstellen einer Inlaylage (20) aus thermoplastischer und temperaturstabilem Folienmaterial aus Glykol-modifiziertem Polyethylenterephthalat (PETG) oder Polycarbonat (PC) ;
b. Bedrucken der Inlaylage (20) mit wenigstens einem Farbbildabschnitt (16), mittels Druckfarbe in Tintenstrahltechnik;
c. Bereitstellen einer Overlaylage (14) aus thermoplastischer und temperaturstabilem Folienmaterial aus Glykol-modifiziertem Polyethylenterephthalat (PETG) oder Polycarbonat (PC) ;
d. Aufbringen von Sicherheitsmerkmalen (14a, 14b) in Form von Offsetdruck, Guillochen, Mikrotext oder Sicherheitsfarben auf einer Seite der Overlaylage (14);
e. Bedrucken der gegenüberliegenden Seite der Overlaylage (14) mit einem Lösemittel-basierten Aktivator (14c) in einem Aktivatorbereich, so dass nach einem Zusammenführen der Overlaylage (14) und der Inlaylage (20) der Aktivatorbereich mit dem wenigstens einen Farbbildabschnitt (16) zumindest teilweise zur Deckung kommt, wobei der Aktivator (14c) thermoplastisch ist und synthetische Kunstharze mit organischen Lösemitteln enthält, Inhaltsstoffe des Aktivators (14c) so gewählt werden, dass sie vom für die Overlaylage (14) und die Inlaylage (20) verwendeten Folienmaterial unabhängig sind; und wobei zumindest der Aktivator (14c) und die Farbtinte an den Orten keine klare Grenzlinie bilden, an denen sie aneinander liegen, und die Inhaltsstoffe des Aktivators thermoplastisch und hitzebeständig bis 200 °Celsius sind;
f. Zusammenführen der Overlaylage (14) und der Inlaylage (20), so dass der wenigstens eine Farbbildabschnitt (16) der Inlaylage (20) mit dem mit Aktivator (14c) bedruckten Bereich der Overlaylage (14) zumindest teilweise zur Deckung kommt;Laminieren und Abkühlen der Overlaylage (14) und der Inlaylage (20), wobei die beiden Lagen so aneinander laminiert werden, dass das Farbbild und der Aktivator (14c) miteinander in Kontakt kommen und durch entsprechend gewählte Druck-, Temperatur- und Zeit - Parameter der Lamination miteinander thermisch reagieren, wobei eine Verbindung, ein Verbund oder eine Vermischung aus dem Aktivator (14c) und der Farbtinte entsteht, und die beiden Lagen zu einem Lagenverbund vereint werden; sowie
g. Vereinzeln des einen oder mehrerer Sicherheits- oder Identifikationsdokumente aus dem Lagenverbund.

2. Das Verfahren nach Anspruch 1, wobei die synthetischen Kunstharze mit der Druckfarbe und mit den organischen Lösemitteln bei einer Erwärmung auf über 100° Celsius thermisch reagieren, und / oder wobei der Aktivator folgende Betandteile enthält:
2-Methoxy-1-methylethylacetat 50 - 100 Gew. %,
Dihydro-2(3 H)-furanon 12,5 - 20 Gew. %, und
2-Methoxypropylacetat 0,1 - 0,25 Gew. %.

3. Das Verfahren nach Anspruch 1 oder 2, wobei der Aktivator (14c) mit ungeradliniger Randkontur aufgebracht wird.

4. Das Verfahren nach einem der vorhergehenden Ansprüche, wobei als Farbtinte zum Bedrucken der Inlaylage (20) eine Farbtinte mit einer oder mehrerer der folgenden Tintenanteile verwendet wird:
a. Schwarz enthaltend
i. Gamma-butyrolacton mit einem Anteil von > 10 Gewichts-%,
ii. Vinylchlorid-Vinylacetatecopolymer mit einem Anteil von > 5 Gewichts-%, und
iii. Carbon SCHWARZ als Farbstoff mit einem Anteil von > 2,5 Gewichts-%;
b. Magenta enthaltend
i. Gamma-butyrolacton mit einem Anteil von > 10 Gewichts-%,
ii. 2-Methoxy-1-Methylethylacetat mit einem Anteil von > 10 Gewichts-%, und
iii. Quinacridone MAGENTA als Farbstoff mit einem Anteil von > 1 Gewichts-%;
c. Cyan enthaltend
i. Gamma-butyrolacton mit einem Anteil von > 10 Gewichts-%,
ii. Vinylchlorid-Vinylacetatecopolymer mit einem Anteil von > 5 Gewichts-%, und
iii. Phthalocyanin - BLAU als Farbstoff mit einem Anteil von > 1 Gewichts-%; und
d. Gelb enthaltend
i. Gamma-butyrolacton mit einem Anteil von > 10 Gewichts-%,
ii. Vinylchlorid-Vinylacetatecopolymer mit einem Anteil von > 5 Gewichts-%, und
iii. Azo Nickel Complex Pigment als Farbstoff mit einem Anteil von > 5 Gewichts-%.

5. Das Verfahren nach einem der vorhergehenden Ansprüche, wobei dem Aktivator (14c) und / oder der Druckfarbe Sicherheitspigmente beigemischt werden.

6. Das Verfahren nach einem der vorhergehenden Ansprüche, wobei zu dem Bedrucken der Inlaylage (20) ein Drucksystem mit einer Druckstation und mehreren unterschiedlich zu erwärmende Heizzonen verwendet wird, wobei die Heizzonen in dem Drucksystem auf der von einer Bedruckseite der Inlaylage (20) abliegenden Seite, aufstromseitig und abstromseitig zur Druckstation sowie bei der Druckstation angeordnet sind, und wobei die Heizzonen mit einem in Durchlaufrichtung der Inlaylage (20) durch das Drucksystem ansteigenden Temperaturprofil betrieben werden.

7. Das Verfahren nach einem der vorhergehenden Ansprüche, wobei das Bedrucken der Inlaylage (20) in dem Drucksystem mit 600 DPI oder einer höheren Auflösung erfolgt, und / oder wobei ein Farbprofil auf das Material der Inlaylage (20) abgestimmt wird, und die Tintenmenge auf die Durchlaufgeschwindigkeit und das Temperaturprofil der Heizzonen des Drucksystems angepasst wird.

8. Das Verfahren nach einem der vorhergehenden Ansprüche, wobei das Folienmaterial als Bogenmaterial oder endloses Bahnmaterial eine Dicke von mind. 75 µm oder mehr aufweist.

9. Das Verfahren nach einem der vorhergehenden Ansprüche, wobei unter der das Farbbild tragenden Inlaylage (20) mindestens eine laserfähige Folienlage eingefügt wird, in welchen ein Laserbild (14a, 14b) eingebracht wird, wobei vorzugsweise das Laserbild nachträglich durch das Farbbild und den Aktivator hindurch erzeugt wird.

10. Das Verfahren nach einem der vorhergehenden Ansprüche, wobei zum Laminieren der Inlaylage (20) und der Overlaylage (14) eine Laminierstation verwendet wird, in der ein Temperaturprofil und ein Druckprofil auf die verwendete Farbtinte und den verwendeten Aktivator (14c) eingestellt werden, und/oder
wobei das Temperaturprofil und das Druckprofil auf die verwendete Farbtinte und den verwendeten Aktivator (14c) so eingestellt werden, dass sich zuerst der Aktivator (14c) mit der Farbtinte im Laminierprozess durch Erhitzung verbindet und sich dann die Overlaylage (14) und die Inlaylage (20) sich mit einander verbinden, wobei vorzugsweise Lagen aus gleichwertigem Material mit Lagendicken von 100 µm oder mehr verwendet werden.

11. Mehrlagiges Sicherheits- oder Identifikationsdokument, herzustellen nach dem Verfahren nach einem oder mehreren der vorherigen Ansprüche, mit folgendem Aufbau:
a. wenigstens eine eine Frontseite bildende erste Overlaylage (14), und
b. wenigstens eine eine Kernlage bildende erste Inlaylage (20), die an der ersten Overlaylage (14) anliegt, wobei
die Overlaylage (14) auf einer zu der ersten Inlaylage (20) hin orientierten Seite in einem Aktivatorbereich mit einem Lösemittel-basierten Aktivator (14c) versehen ist, der thermoplastisch ist und synthetische Kunstharze mit organischen Lösemitteln enthält, und die Inlaylage (20) auf einer zu der ersten Overlaylage (14) hingewandten Seite mittels Druckfarbe in Tintenstrahltechnik mit wenigstens einem Farbbildabschnitt (16) bedruckt ist, der ein Gesichtsbild einer Person ist,
c. wobei auf einer Seite der Overlaylage (14) Sicherheitsmerkmale in Form von Offsetdruck, Guillochen, Mikrotext oder Sicherheitsfarben aufgebracht sind, und auf der gegenüberliegenden Seite der Aktivator (14c) aufgebracht ist,
d. wobei der Aktivatorbereich und der Farbbildabschnitt (16) jeweils so an der Overlaylage (14) bzw. der Inlaylage (20) angeordnet, gestaltet und bemessen sind, dass der Aktivatorbereich und der wenigstens eine Farbbildabschnitt (16) einander zumindest teilweise überdecken und die synthetischen Kunstharze mit der Druckfarbe und mit den organischen Lösemitteln thermisch verbunden sind, wodurch eine Verbindung, ein Verbund oder eine Vermischung aus dem Aktivator (14c) und der Farbtinte gebildet ist; wobei Inhaltsstoffe des Aktivators (14c) vom für die Overlaylage (14) und die Inlaylage (20) verwendeten Folienmaterial unabhängig sind; und wobei zumindest der Aktivator (14c) und die Farbtinte an den Orten keine klare Grenzlinie bilden, an denen sie aneinander liegen, und die Inhaltsstoffe des Aktivators thermoplastisch und hitzebeständig bis 200 °Celsius sind;
e. wobei
f. die Overlay- und Inlay-Lagen Folienmaterial aus Glykol-modifiziertem Polyethylenterephthalat (PETG) oder Polycarbonat (PC) sind,
g. die erste Overlaylage (14) und die erste Inlaylage (20) zu einem Lagenverbund zusammenlaminiert sind.

12. Mehrlagiges Sicherheits- oder Identifikationsdokument nach Anspruch 11, bei dem auf einer von der ersten Overlaylage (14) abgewandten Seite der ersten Inlaylage (20) eine zweite, dritte, ... n-te Inlaylage (26) angeordnet ist, und / oder bei dem auf einer von der ersten Inlaylage (20) abgewandten Seite der ersten Overlaylage (14) wenigstens eine zweite Overlaylage (10) angeordnet ist, und / oder bei dem auf einer von der ersten Overlaylage (14) abgewandten Seite der ersten, zweiten, dritten, ... n-ten Inlaylage (26) wenigstens eine erste Underlaylage (30) angeordnet ist, und/oder bei dem auf einer von der ersten, zweiten, dritten, ... n-ten Inlaylage abgewandten Seite der ersten Underlaylage (30) wenigstens eine zweite Underlaylage (34) angeordnet ist.

13. Mehrlagiges Sicherheits- oder Identifikationsdokument nach einem der vorhergehenden Erzeugnisansprüche, wobei in laserfähigen Lagen außerhalb der oder den Inlaylagen (20, 26) wenigstens eine Laserpersonalisierung verteilt angeordnet ist, wobei vorzugsweise die bedruckte erste Overlaylage (14) laserfähig ist, und/oder wobei der Aktivator (14c) wenigstens ein in Bezug auf den Aktivator (14c) oder die Farbtinte chemisch inertes Pigment aufweist, vorzugsweise in Form von Flocken, mit einer Partikelgröße von etwa 5 µm bis etwa 60 µm, bevorzugt etwa 15 µm bis etwa 40 µm, vorzugsweise mit einem Gewichtsanteil von nicht mehr als 1% bezogen auf das Gewicht des Aktivators, und enthaltend zum Beispiel Silizium, Siliziumdioxid, Glimmer, Titan- oder Zinnoxid.

14. Mehrlagiges Sicherheits- oder Identifikationsdokument nach einem der vorhergehenden Erzeugnisansprüche, in dem die Pigmente
- einen optischen Effekt über dem Farbbild bewirken, der mit bloßem Auge sichtbar ist, und/oder einen schimmernden Glanzeffekt erzeugt; und/oder
- unter einem Mikroskop als Sicherheits-Pigmente oder als Farbpigmente, zum Beispiel aus Glimmer + SiO₂, TiO₂ und SnO₂, detektierbar sind; und/oder
- in spezifischen Mischverhältnissen als zwei, drei oder mehr unterschiedliche Pigmente vorgesehen sind, welche Mischverhältnisse mit bloßem Auge oder unter einem Mikroskop unterscheidbar sind.

15. Mehrlagiges Sicherheits- oder Identifikationsdokument nach einem der vorhergehenden Erzeugnisansprüche, in dem die Inhaltsstoffe des Aktivators (14c) so gewählt werden, dass sie vom für die Overlaylage (14) und die Inlaylage (20) verwendeten Folienmaterial unabhängig sind; und/oder wobei zumindest der Aktivator (14c) und die Farbtinte an den Orten keine klare Grenzlinie bilden, an denen sie aneinander liegen; und/oder wobei der Aktivator (14c) mit ungeradliniger Randkontur aufgebracht ist.

## Claims

1. A method for producing a multilayer security and identification document by the following steps:
a. providing an inlay layer (20) made of thermoplastic and temperature stable foil material made of glycol modified polyethylene terephthalate (PETG) or polycarbonate (PC);
b. imprinting the inlay layer (20) with at least one colour picture portion (16) by means of printing ink using inkjet technology;
c. providing an overlay layer (14) made of thermoplastic and temperature stable foil material made of glycol modified polyethylene terephthalate (PETG) or polycarbonate (PC);
d. applying security features (14a, 14b) in form of an offset print, Guilloche, micro text or security colours on a side of the overlay layer (14);
e. imprinting the opposite side of the overlay layer (14) by a solvent-based activator (14c) in an activator region, such that, after uniting the overlay layer (14) and the inlay layer (20), the activator region with the at least one colour picture portion (16) is at least partially covered, wherein the activator (14c) is thermoplastic and includes synthetic resins with organic solvents, and ingredients of the activator (14c) are selected such that they are independent from foil material used for the overlay layer (14) and the inlay layer (20); and wherein at least the activator (14c) and the colour ink form no clear boundary line at locations where they are adjacent to each other, and wherein the ingredients of the activator are thermoplastic and heat resistant until 200° Celsius;
f. uniting the overlay layer (14) and the inlay layer (20), such that the at least one colour picture portion (16) of the inlay layer (20) is at least partially covered by the region imprinted by the activator (14c) of the overlay layer (14); laminating and cooling the overlay layer (14) and the inlay layer (20), wherein both layers are laminated together such that the colour picture and the activator (14c) contact each other and thermally react together by correspondingly selected pressure, temperature and time parameters of the lamination, which results in a compound, a composite or a mixture of the activator (14c) and the colour ink, and wherein both layers unite to a layer composite; and
g. separating the one or more security or identification documents of the layer composite.

2. The method according to claim 1, wherein the synthetic resins with the print colour and the organic solvents terminally react at a heating over 100° Celsius, and/or wherein the activator includes following ingredients:
2-methoxy-1-methylethyl acetate 50 - 100 weight-%,
Dyhydro-2 (3 H)-furanon 12.5 -20 weight-%, and
2-methoxy propyl acetate 0.1 - 0.25 weight-%.

3. The method according to claim 1 or 2, wherein the activator (14c) is applied with a non-straight edge contour.

4. The method according to one of the foregoing claims, wherein a colour ink is used as colour ink for imprinting the inlay layer (20) with one or more of the following
ink shares:
a. black including
i. gamma-butyrolactone with a share of > 10 weight-%,
ii. vinyl chloride-vinyl acetate copolymer with a share of > 5 weigth-%, and
iii. carbon black as colour ink with a share of > 2.5 weight-%;
b. magenta including
i. gamma-butyrolactone with a share of > 10 weight-%,
ii. 2-methoxy-1-methylethyl acetate with a share of > 10 weight-%, and
iii. quinacridone magenta as colour ink with a share of > 1 weight-%;
c. cyan including
i. gamma-butyrolactone with a share of > 10 weight-%,
ii. vinyl chloride-vinyl acetate copolymer with a share of > 5 weight-%, and
iii. phthalocyanine - blue as dye with a share of > 1 weight-%; and
d. yellow including
i. gamma-butyrolactone with a share of > 10 weight-%,
ii. vinyl chloride-vinyl acetate copolymer with a share of > 5 weight-%, and
iii. azo nickel complex pigment as dye with a share of > 5 weight%.

5. The method according to any one of the foregoing claims, wherein the activator (14c) and/or the print colour is mixed with security pigments.

6. The method according to any one of the foregoing claims, wherein a print system with a print station and multiple different heating zones to be heated are used for imprinting the inlay layer (20), wherein the heating zones in the print system are arranged on the opposite side of the imprinting side of the inlay layer (20), upstream and downstream of the print station and the print station, and wherein the heating zones are operated with an increasing temperature profile in a streaming direction of the inlay layer (20) through the print system.

7. The method according to any one of the foregoing claims, wherein the imprinting of the inlay layer (20) in the print system is performed by 600 dpi or a high-resolution, and/or wherein a colour profile of the material of the inlay layer (20) is matched, and the ink quantity is adapted to the pass rate and the temperature profile of the heating zones of the print system.

8. The method according to any one of the foregoing claims, wherein the foil material as bow material or endless web material has a thickness of at least 75 µm or more.

9. The method according to any one of the foregoing claims, wherein a laser capable foil layer is inserted below the inlay layer (20) carrying the colour picture, in which foil layer a laser picture (14a, 14b) is inserted, wherein preferably the laser picture is later generated through the colour picture and the activator.

10. The method according to any one of the foregoing claims, wherein a laminating station is used for laminating the inlay layer (20) and the overlay layer (14), in which laminating station a temperature profile and a pressure profile of the used colour ink and the used activator (14c) is adjusted, and/or
wherein the temperature profile and the pressure profile of the used colour ink and the used activator (14c) are adjusted such that first the activator (14c) is connected with the colour ink during the laminating process by heating and then the overlay layer (14) and the inlay layer (20) are connected together, wherein preferably layers of the same material with a layer thickness of 100 µm or more are used.

11. A multilayer security and identification document, to be produced by the method according to any one of the foregoing claims, having the following structure:
a. at least a first overlay layer (14) forming a front side, and
b. at least a first inlay layer (20) forming a core layer, wherein the inlay layer is adjacent to the first overlay layer (14), wherein the overlay layer (14) is arranged on one side of an activator region with a solvent-based activator (14c) oriented to the first inlay layer (20), which activator includes thermoplastic and synthetic resins with organic solvents, and wherein the inlay layer (20) is imprinted on one side oriented to the first overlay layer (14) by means of print colour using inkjet technology with at least a colour picture portion (16), which is a face picture of a person,
c. wherein security features are applied on a side of the overlay layer (14) in the form of an offset print, Guilloche, micro text or security colours, and wherein the activator (14c) is applied on the opposite side,
d. wherein the activator region and the colour picture portion (16) are arranged, designed and dimensioned at the overlay layer (14) and the inlay layer (20) respectively, such that the activator region and the at least one colour picture portion (16) at least partially cover each other and the synthetic resins are thermally connected to the print colour and the organic solvent, whereby a compound, a composite or a mixture is formed by the activator (14c) and the colour ink; wherein ingredients of the activator (14c) are independent from foil material used for the overlay layer (14) and the inlay layer (20); and wherein at least the activator (14c) and the colour ink form no clear boundary line at locations where they are adjacent to each other, and wherein the ingredients of the activator are thermoplastic and heat resistant until 200° Celsius;
e. wherein
f. the overlay and inlay layers are made of glycol modified polyethylene terephthalate (PETG) or polycarbonate (PC);
g. the first overlay layer (14) and the first inlay layer (20) are laminated together to a layer composite.

12. The multilayer security and identification document according to claim 11,
wherein a second, third ... nth inlay layer (26) is arranged on a side of the first inlay layer (20) opposite from the first overlay layer (14), and/or wherein at least one second overlay layer (10) is arranged on a side of the first overlay layer (14) opposite to the first inlay layer (20), and/or wherein at least one first underlay layer (30) is arranged on a side of the first, second, third ... nth inlay layer (26) opposite to the first overlay layer (14), and/or wherein at least a second underlay layer (34) is arranged on a side of the first underlay layer (30) opposite to the first, second, third ... nth inlay layer.

13. The multilayer security and identification document according to any one of the foregoing product claims, wherein at least one laser personalization is distributed in laser capable layers outside the inlay layers (20, 26), wherein preferably the imprinted first overlay layer (14) is laser capable, and/or wherein the activator (14c) has at least an chemical inert pigment with respect to the activator (14c) or the colour ink, preferably in the form of flakes, with a particle size of circa 5 µm to 60 µm, preferably circa 15 µm to 40 µm, preferably with a weight share of not more than 1% with respect to the weight of the activator, and including for example silicon, silicon dioxide, glimmer, titanium oxide or tin oxide.

14. The multilayer security and identification document according to any one of the foregoing product claims, wherein the pigments
- effect an optical effect over the colour picture, which is visible for the naked eye, and/or a shimmering shining effect; and/or
- are detectable under a microscope as security pigments or as colour pigments, for example made of glimmer + SiO₂, TiO₂ and SnO₂; and/or
- are provided in specific mixture proportions as two, three or more different pigments, which mixture proportions are distinguishable for the naked eye or under a microscope.

15. The multilayer security and identification document according to any one of the foregoing product claims, wherein the ingredients of the activator (14c) are selected such that they are independent from the foil material used for the overlay layer (14) and the inlay layer (20): and/or wherein at least the activator (14c) and the colour ink form no clear boundary line at locations where they are adjacent to each other; and/or wherein the activator (14c) is applied with a non-straight edge contour.

## Revendications

1. Procédé de fabrication d'un document de sécurité ou document d'identification multicouche, comprenant les étapes suivantes :
a. la mise à disposition d'une couche "inlay" (20) constituée d'une feuille thermoplastique stable en température en polyéthylène téréphtalate glycolisé (PETG) ou en polycarbonate (PC) ;
b. l'impression sur la couche "inlay" (20) d'au moins un segment d'image en couleur (16) au moyen d'une encre d'imprimerie par la technique d'impression au jet j'encre ;
c. la mise à disposition d'une couche "overlay" (14) constituée d'une feuille thermoplastique stable en température en polyéthylène téréphtalate glycolisé (PETG) ou en polycarbonate (PC) ;
d. l'application sur une face de la couche "overlay" (14) d'éléments de sécurité (14a, 14b) sous forme d'impression offset, de guilloches, de micro-texte ou de couleurs de sécurité ;
e. l'impression, dans une zone d'activateur, d'un activateur (14c) à base de solvant sur la face opposée de la couche "overlay" (14) de sorte qu'une fois la couche "overlay" (14) et la couche "inlay" (20) réunies, la zone d'activateur vient recouvrir au moins en partie ledit au moins un segment d'image en couleur (16), cet activateur (14c) étant thermoplastique et contenant des résines synthétiques à solvants organiques, les composants de l'activateur (14c) étant sélectionnés de sorte qu'ils sont indépendants de la feuille utilisée pour la couche "overlay" (14) et la couche "inlay" (20) ; et au moins l'activateur (14c) et l'encre de couleur ne forment pas une ligne de démarcation claire aux endroits où ils se touchent, et les composants de l'activateur étant thermoplastiques et résistants à la chaleur jusqu'à 200 °Celsius ;
f. la réunion de la couche "overlay" (14) et de la couche "inlay" (20) de sorte que ledit au moins un segment d'image en couleur (16) de la couche "inlay" (20) vient recouvrir au moins en partie la zone de la couche "overlay" (14) sur laquelle l'activateur (14c) a été imprimé ; la lamination et le refroidissement de la couche "overlay" (14) et de la couche "inlay" (20), ces deux couches étant laminées l'une sur l'autre de telle manière que l'image en couleur et l'activateur (14c) viennent au contact l'un de l'autre et réagissent ensemble thermiquement sous l'effet de paramètres de pression, de température et de temps de la lamination sélectionnés en conséquence, l'activateur (14c) et l'encre de couleur donnant un composé, un composite ou un mélange, et ces deux couches formant réunies un ensemble multicouche ; et
g. la séparation d'un ou de plusieurs documents de sécurité ou documents d'identification de cet ensemble multicouche.

2. Ledit procédé selon la revendication 1, les résines synthétiques réagissant thermiquement avec la couleur d'impression et avec les solvants organiques lorsqu'elles sont portées à une température de plus de 100 °Celsius, et / ou l'activateur contenant les composants suivants : acétate de 2-méthoxy-1-méthyléthyle 50 à 100 % poids, dihydro-2(3H)-furanone 12,5 à 20 % poids, et acétate de 2-méthoxypropyle 0,1 à 0,25 % poids.

3. Ledit procédé selon la revendication 1 ou 2, l'activateur (14c) étant appliqué suivant un contour de bord non-rectiligne.

4. Ledit procédé selon l'une des revendications précédentes, l'encre de couleur utilisée pour l'impression de la couche "inlay" (20) consistant en une encre de couleur contenant une ou plusieurs des proportions d'encre suivantes :
a. contenant du noir
i. gamma-butyrolactone, dans la proportion de plus de 10 % poids,
ii. copolymère d'acétate de vinyle et de chlorure de vinyle, dans la proportion de plus de 5 % poids, et
iii. NOIR de carbone en tant que colorant, dans la proportion de plus de 2,5 % poids;
b. contenant du magenta
i. gamma-butyrolactone dans la proportion de plus de 10 % poids,
ii. acétate de 2-méthoxy-1-méthyléthyle, dans la proportion de plus de 10 % poids, et
iii. quinacridone MAGENTA en tant que colorant, dans la proportion de plus de 1 % poids ;
c. contenant du cyan
i. gamma-butyrolactone dans la proportion de plus de 10 % poids,
ii. copolymère d'acétate de vinyle et de chlorure de vinyle, dans la proportion de plus de 5 % poids, et
iii. phthalocyanine - BLEU en tant que colorant, dans la proportion de plus de 1 % en poids; et
d. contenant du jaune
i. gamma-butyrolactone, dans la proportion de plus de 10 % poids,
ii. copolymère d'acétate de vinyle et de chlorure de vinyle, dans la proportion de plus de 5 % poids, et
iii. pigment azo nickel complex en tant que colorant, dans la proportion de plus de 5 % poids.

5. Ledit procédé selon l'une des revendications précédentes, des pigments de sécurité étant mélangés à l'activateur (14c) et / ou à la couleur d'impression.

6. Ledit procédé selon l'une des revendications précédentes, un système d'impression comportant un poste d'impression et plusieurs zones chauffantes à chauffer différemment étant utilisé pour imprimer la couche "inlay" (20), les zones chauffantes à l'intérieur dudit système d'impression étant disposées en amont et en aval du poste d'impression ainsi qu'à hauteur du poste d'impression, sur la face opposée à un côté d'impression de la couche "inlay" (20), et les zones chauffantes fonctionnant avec un profil de température croissant dans la direction de défilement de la couche "inlay" (20) à travers le système d'impression.

7. Ledit procédé selon l'une des revendications précédentes, l'impression de la couche "inlay" (20) à l'intérieur du système d'impression étant effectuée avec une résolution de 600 DPI ou plus, et / ou un profil de couleur étant assorti au matériau de la couche "inlay" (20), et la quantité d'encre étant adaptée à la vitesse de déplacement et au profil de température des zones chauffantes du système d'impression.

8. Ledit procédé selon l'une des revendications précédentes, la feuille en tant que feuille unitaire ou en tant que bande sans fin présentant une épaisseur d'au moins 75 µm ou plus.

9. Ledit procédé selon l'une des revendications précédentes, au moins une couche de feuille compatible au laser, dans laquelle est placée une image laser (14a, 14b), étant insérée sous la couche "inlay" (20) supportant l'image en couleur, l'image laser étant préférentiellement produite ultérieurement au travers de l'image en couleur et l'activateur.

10. Ledit procédé selon l'une des revendications précédentes, un poste de lamination étant utilisé pour la lamination de la couche "inlay" (20) et de la couche "overlay" (14), dans lequel un profil de température et un profil d'impression sont préréglés en fonction de la couleur d'encre et de l'activateur utilisés, et /ou le profil de température et le profil d'impression sont préréglés en fonction de la couleur d'encre et de l'activateur utilisés de telle manière que l'activateur (14c) se lie tout d'abord par chauffage à la couleur d'encre au cours du processus de lamination et que la couche "overlay" (14) et la couche "inlay" (20) se lient par la suite l'une à l'autre, des couches composées de matériau équivalent étant de préférence utilisées dans des épaisseurs de couche de 100 µm ou plus.

11. Document de sécurité ou d'identification multicouche, à fabriquer selon ledit procédé selon l'une ou plusieurs des revendications précédentes, présentant la structure suivante :
a. au moins une première couche "overlay" (14) formant une face frontale, et
b. au moins une première couche "inlay" (20) qui forme une couche centrale et qui est en contact avec la première couche "overlay" (14),
la couche "overlay" (14) étant pourvue, dans une zone d'activateur, sur une face orientée vers la première couche "inlay" (20), d'un activateur (14c) à base de solvant qui est thermoplastique et qui contient des résines synthétiques à solvants organiques, et un segment d'image en couleur (16) représentant l'image faciale d'une personne étant imprimée au moyen d'encre d'imprimerie par la technique d'impression au jet j'encre sur la couche "inlay" (20), sur une face tournée vers la première couche "overlay" (14),
c. des éléments de sécurité (14a, 14b) sous forme d'impression offset, de guilloches, de micro-texte ou de couleurs de sécurité étant appliqués sur une face de la couche "overlay" (14), et l'activateur (14c) étant appliqué sur la face opposée ;
d. la zone d'activateur et le segment d'image en couleur (16) étant respectivement disposés, conçus et dimensionnés sur la couche "overlay" (14) et sur la couche "inlay" (20) de manière telle que la couche "overlay" (14) et ledit au moins un segment d'image en couleur (16) se recouvrant mutuellement au moins en partie et les résines synthétiques étant thermiquement liées à la couleur d'impression et aux solvants organiques de sorte que l'activateur (14c) et l'encre de couleur forment un composé, un composite ou un mélange, les composants de l'activateur (14c) étant indépendants de la feuille utilisée pour la couche "overlay" (14) ou la couche "inlay" (20); et au moins l'activateur (14c) et l'encre de couleur ne formant pas de ligne de démarcation claire aux endroits où ils se touchent, et les composants de l'activateur étant thermoplastiques et résistants à la chaleur jusqu'à 200 °Celsius;
e. et
f. les couches "overlay" et "inlay" étant constituées d'une feuille en polyéthylène téréphtalate glycolisé (PETG) ou en polycarbonate (PC),
g. la première couche "overlay"" (14) et la première couche "inlay" (20) étant laminées ensemble en un ensemble de couches.

12. Document de sécurité ou d'identification multicouche selon la revendication 11, dans le cadre duquel une deuxième, une troisième, ... une énième couche "inlay" (26) sont disposées sur une face de la première couche "inlay" (20) opposée à la première couche "overlay" (14), et / ou dans le cadre duquel au moins une deuxième couche "overlay" (14) est disposée sur une face de la première couche "overlay" (14) opposée à la première couche "inlay" (20), et / ou au moins une première couche "underlay" (30) est disposée sur une face de la première, de la deuxième, de la troisième ... de l'énième couche "inlay" (26) opposée à la première couche "overlay" (14), et / ou dans le cadre duquel au moins une deuxième couche "underlay" (34) est disposée sur une face de la première couche "underlay" (30) opposée à la première, à la deuxième, à la troisième, ... à l'énième couche "inlay".

13. Document de sécurité ou d'identification multicouche selon l'une des revendications précédentes, au moins une personnalisation au laser étant disposée répartie dans les couches compatibles au laser, à l'extérieur de la ou des couches "inlay" (20, 26), préférentiellement la première couche "overlay" (14) imprimée étant compatible au laser, et / ou l'activateur (14c) présente au moins un pigment chimiquement inerte par rapport à l'activateur (14c) ou à l'encre d'imprimerie, préférentiellement sous forme de flocons ayant une taille de particules comprise entre environ 5 et environ 60 µm, préférentiellement entre environ 15 et environ 40 µm, ayant préférentiellement une proportion pondérale ne dépassant pas 1 % par rapport au poids de l'activateur, et contenant par exemple du silicium, du dioxyde de silicium, du mica, de l'oxyde de titane ou d'étain.

14. Document de sécurité ou d'identification multicouche selon l'une des revendications de produit précédentes, à l'intérieur duquel les pigments
- les pigments produisent sur l'image en couleur un effet optique visible à l'oeil nu, et/ou un effet d'éclat brillant; et/ou
- les pigments peuvent être détectés au microscope sous forme de pigments de sécurité ou pigments de couleur composés par exemple de mica + SiO2, TiO2 et SnO2; et/ou
- les pigments sont prévus sous forme de pigments différents au nombre de deux, trois ou plus, dans des rapports de mélange spécifiques lesquels peuvent être différenciés à l'oeil nu ou au microscope.

15. Document de sécurité ou d'identification multicouche selon l'une des revendications de produit précédentes, dans le cadre duquel les composants de l'activateur (14c) sont sélectionnés de telle manière qu'ils sont indépendants de la feuille utilisée pour la couche "overlay" (14) et la couche "inlay" (20); et/ou au moins l'activateur (14c) et l'encre de couleur ne forment pas une ligne de démarcation claire aux endroits où ils se touchent; et/ou l'activateur (14c) est appliqué avec un contour de bord non rectiligne.
